# EUROPEAN PATENT APPLICATION

(11) **EP 2 669 631 A1**
(43) Date of publication of application: **04.12.2013**
(21) Application number: 11857246.0
(22) Date of filing: 08.12.2011
(51) Int. Cl.: G01C 21/26, B60R 16/02

(54) **APPARATUS FOR OPERATING IN-VEHICLE INFORMATION APPARATUS**

(30) Priority: 26.01.2011 JP 2011013926
(71) Applicant: Nissan Motor Co., Ltd, Yokohama-shi, Kanagawa 221-0023 (JP)
(72) Inventor: KATSURAGAWA, Keiko, Kanagawa 243-0123 (JP)
(74) Representative: Hoefer & Partner
(86) International application number: PCT/JP2011/078381
(87) International publication number: WO 2012/101909

(57) **Abstract**

In an operating device for restricting the operation while driving, for in-vehicle information equipment 110, it has load detection units 121 and 220 for detecting a driving load on an operator, an operation extraction unit 123 for extracting an operation which can be completed under the circumstances of the detected driving load, and a control unit 130 for making only the extracted operation operable.

## Description

### TECHNICAL FIELD

The present invention relates to an operating device for in-vehicle information equipment.

### BACKGROUND ART

There is known an in-vehicle navigation device in which the presence or absence of an operation of an operation unit by a driver and an operation of an operation unit by other than the driver while running is estimated from a temperature distribution of a body of each occupant in a vehicle detected by a thermography, and in the case where the presence of the operation of the operation unit by the driver has been estimated, the operation is shifted to an operation inhibit mode, whereas in the case where the presence of the operation of the operation unit by other than the driver has been estimated, the operation is shifted to an operation permit mode other than the driver (Patent Literature 1).

### CITATION LIST

### PATENT LITERATURE

Patent Literature 1: Japanese Patent Application Laid-Open Publication No. 2007-292535

### SUMMARY OF INVENTION

### TECHNICAL PROBLEM

However, in the above-mentioned prior art, there was such a problem in which an additional component such as thermography is needed.

An object of the present invention is to provide an operating device for in-vehicle information equipment that does not especially require an additional component for inhibiting or allowing the operation.

### SOLUTION TO PROBLEM

The present invention attains the above-mentioned object by detecting a driving load on an operator through the use of an existing component, extracting, by arithmetic processing, an operation in which the operation can be completed under the circumstances of the detected driving load, and allowing only the extracted operation.

### ADVANTAGEOUS EFFECTS OF INVENTION

According to the present invention, since the driving load on the operator is detected by using the existing component and only the operation in which the operation can be completed under these circumstances is allowed, the additional component for inhibiting or allowing the operation is not especially required.

### BRIEF DESCRIPTION OF DRAWINGS

[Fig. 1] Fig. 1 is a block diagram showing an in-vehicle information equipment system to which one embodiment of the present invention has been applied.
[Fig. 2] Fig. 2 is a block diagram showing an in-vehicle information equipment system of another example of the present invention.

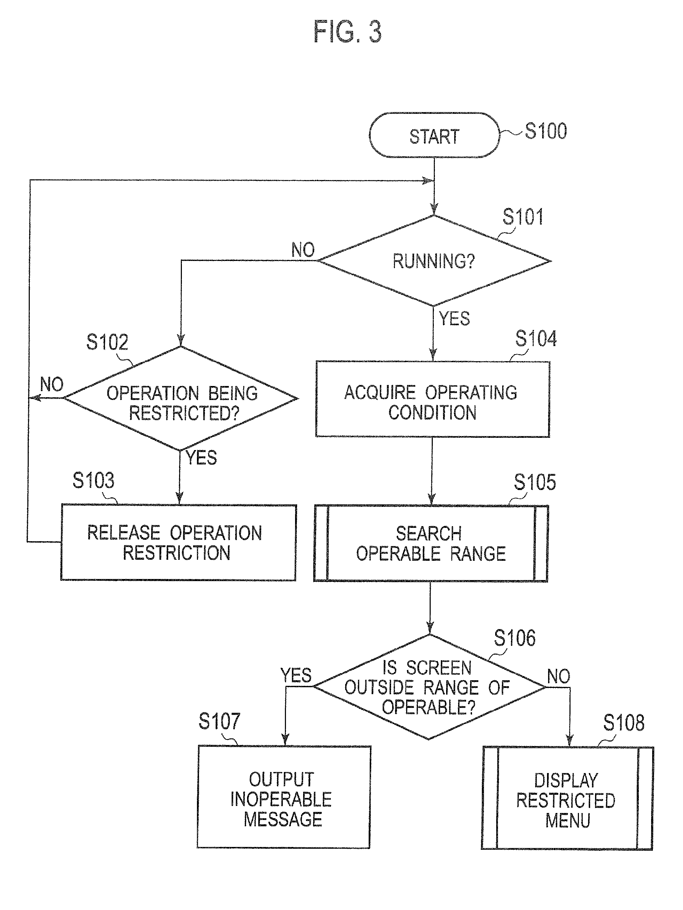

[Fig. 3] Fig. 3 is a flowchart showing operation procedure of the in-vehicle information equipment system in Fig. 1 or Fig. 2.
[Fig. 4] Fig. 4 is a diagram showing a menu structure example of a navigation function group in Fig. 1 or Fig. 2 to be searched in step S105 in Fig. 3.
[Fig. 5] Fig. 5 is a diagram showing a menu output example of the navigation function group in Fig. 4 to be output in step S108 in Fig. 3.
[Fig. 6] Fig. 6 is a diagram showing a menu structure example of the navigation function group in Fig. 1 or Fig. 2 to be searched in step S105 in Fig. 3.
[Fig. 7] Fig. 7 is a diagram showing a menu output example of the navigation function group in Fig. 6 to be output in step S108 in Fig. 3.
[Fig. 8] Fig. 8 is a diagram showing a menu structure example of an audio function group in Fig. 1 or Fig. 2 to be searched in step S105 in Fig. 3.
[Fig. 9] Fig. 9 is a diagram showing a menu output example of the audio function group in Fig. 8 to be output in step S 108 in Fig. 3.
[Fig. 10] Fig. 10 is a diagram showing a menu structure example of the navigation function group in Fig. 1 or Fig. 2 to be searched in step S105 in Fig. 3.
[Fig. 11] Fig. 11 is a diagram showing a menu output example of the navigation function group in Fig. 10 to be output in step S 108 in Fig. 3.

### DESCRIPTION OF EMBODIMENTS

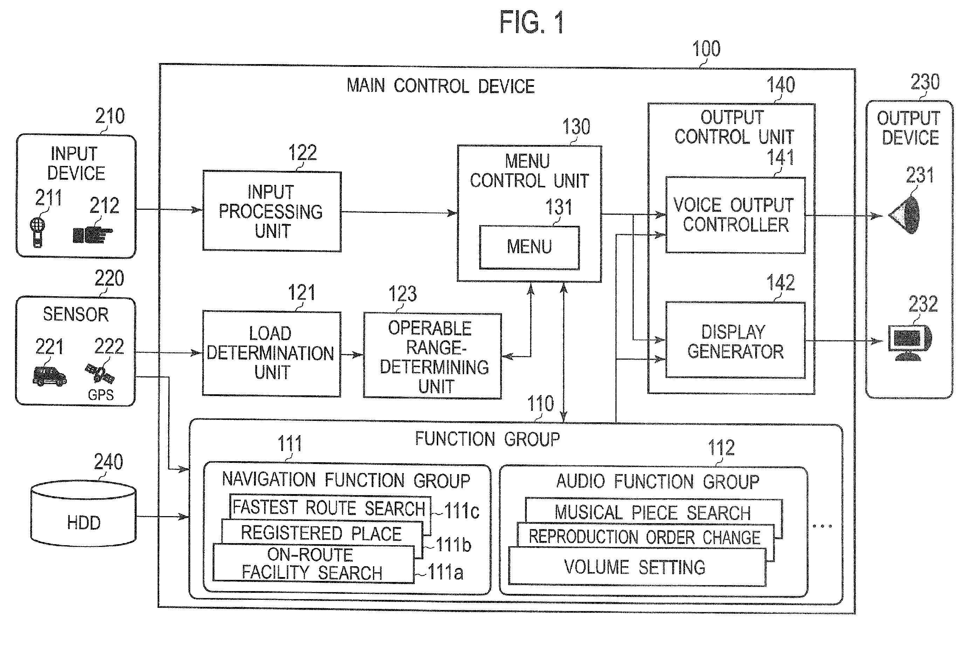

An in-vehicle information equipment system according to the present embodiment shown in Fig. 1 is a system which is mounted on a vehicle and in which an operating device for detecting a load by a driving operation, extracting an operation in which the operation can be completed under the circumstances of the detected load, and making operable only the operation which has been extracted as being capable of completing the operation is incorporated into information equipment for providing a facility search function, a route search function, an audio reproduction function and the like. The in-vehicle information equipment system of the present example is provided with a main control device 100, input devices 210, sensors 220, output devices 230, a storage device 240.

The input devices 210 are composed of a voice input microphone 211 provided at an appropriate place in a vehicle interior, and a switch 212 provided at an appropriate place in the vehicle interior for a manual input operation or touch panels 212 provided on a liquid crystal display 232.

The sensors 220 are composed of a vehicle signal acquisition device 221, a GPS signal acquisition device 222 and the like, for acquiring signals obtained from the vehicle, such as vehicle speed and parking brake ON/OFF signals. These sensors 220 are existing sensors to be used in common as a load detection unit for detecting the driving load of the vehicle on the operator.

The output devices 230 are composed of a loudspeaker 231, a display 232 and the like provided at appropriate places in the vehicle interior.

The main control device 100 is constituted by a microcomputer including a CPU, a ROM and a RAM, is provided with a function group 110 executed in accordance with the input from the input devices 210 and the sensors 220, and presents the execution result to the occupant via the output device 230. Therefore, the main control device 100 is provided with the function group 110, a load determination unit 121, an operable range-determining unit 123, an input processing unit 122, a menu control unit 130, and an output control unit 140.

The function group is formed of functions the in-vehicle information equipment provides, such as a navigation function 111 and an audio function 112. These functions search information on facilities or the like stored in the storage device 240 connected to the main control device 100 and reproduce media contents such as music.

The input processing unit 122 accepts the input by an occupant (an operator) from the input device 210 and outputs the contents thereof to the menu control unit 130.

The menu control unit 130 selects a function the in-vehicle information equipment of the present example provides, or performs menu control for input parameters required for the function. Therefore, the menu control unit 130 is provided with a menu 131, and determines a menu for displaying a result of the input from the input processing unit 122 as required, or reads out a necessary function in the functions present in the function group 110.

The function group 110 is read out from the menu control unit 130, and displays a result of its operation on the output control unit 140 via the menu control unit 130, or operates in the background to send the result of its operation back to the menu control unit 130.

In the in-vehicle information equipment system in Fig. 1, the load determination unit 121, the operable range-determining unit 123, and a part of the menu control unit 130 function as the operating device of the present example, detect the load by the driving operation, extract an operation in which the operation can be completed under the circumstances of the detected load, and make operable only the operation that has been extracted as being capable of completing the operation.

The load determination unit 121 monitors vehicle speed and parking brake signals obtained from a vehicle signal acquisition device 221, and in the case where a fixed vehicle speed has been exceeded and in the case where the parking brake has been released, the load determination unit determines that the load by driving is in a state of being large. Alternatively, in place of this, the load determination unit 121 arithmetically operates a driving load of a scheduled running route, from a current position of the vehicle obtained from a GPS signal acquisition device 222 and map information stored in the storage device 240, and determines that the load by driving is large in the case or the like where a curved track exceeding a predetermined curvature is expected on the scheduled running route.

In the case where the load determination unit 121 determines that the load by driving is large, the operable range-determining unit 123 receives a current function operating condition from the menu control unit 130. Then, the operable range-determining unit 123 extracts an operation which can be completed under the circumstances of the determined driving load on the basis of the received operating condition, and outputs an extraction range to the menu control unit 130.

The menu control unit 130 makes operable only the operation the operable range-determining unit 123 has extracted. Therefore, in the case where an out-of-operable-range menu item is being displayed on the screen of the display 232, the menu control unit grays out the menu item in order to make the menu item inoperable, and also in the case where the menu control unit accepts further input and the screen transitions, the menu control unit grays out these items when inoperable items are included in a screen of a transition destination. In addition, in case of inoperable items accepting a voice operation by voice recognition, the menu control unit executes processing of removing the above-mentioned inoperable items from voice recognition objects.

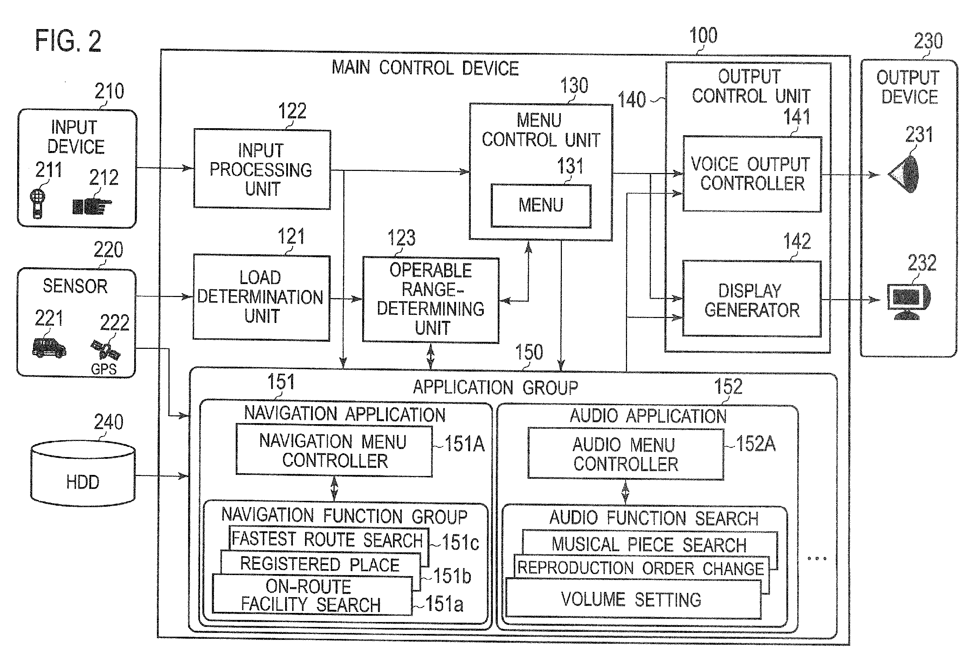

Meanwhile, although the in-vehicle information equipment system in Fig. 1 is configured to control the navigation function 111 and the audio function 112 by the menu control unit 130, the system may be configured to control the navigation function and the audio function by menu controllers 151A and 152A independent of the menu control unit 130 as shown in Fig. 2. That is, in an embodiment shown in Fig. 2, the main control device 100 has independent applications 151 and 152 which take charge of functions of navigation, audio and the like, and each of the applications 151 and 152 has a function of processing input into each function. Therefore, the main control device has the menu controllers 151A and 152A for processing respective menus within the applications 151 and 152.

In the embodiment in Fig. 2, the menu control unit 130 takes charge of a choice function for activating the applications 151 and 152, and after determination of the application 151 and 152 to be activated, activates the application 151 and 152 and transfers input control to the application 151 and 152 having focus.

In the case where the load determination unit 121 determines that the load by driving is large, the operable range-determining unit 123 receives a current function operating condition respectively from the menu control unit 130 and a currently active group in an application group 150. Then, the operable range-determining unit 123 extracts an operation which can be completed under the circumstances of the determined driving load on the basis of the received operating condition, and informs the menu control unit 130 and the currently active applications 151 and 152 of the extraction range.

The menu control unit 130 and the menu controllers 151A and 152B of the currently active applications 151 and 152 make operable only the operation the operable range-determining unit 123 has extracted. Because of this, in the case where an out-of-operable-range menu item is being displayed on the screen, the menu control unit and the menu controllers gray out the menu item in order to make the menu item inoperable, and also in the case where the menu control unit accepts further input and the screen transitions, the menu control unit and the menu controllers gray out these items when inoperable items are included in a screen of a transition destination. In addition, in case of inoperable items accepting a voice operation by voice recognition, the menu control unit and the menu controllers remove the above-mentioned inoperable items from voice recognition objects.

Next, a basic operation flow of the embodiments shown in Fig. 1 and Fig. 2 will be described.
When the system starts up in step S100, the load determination unit 121 keeps monitoring the input from the sensors 220 of the vehicle in step S101 and determines whether the vehicle is running or not. If not running, the procedure proceeds to step S102 and determines whether a restriction is being currently imposed on an input operation.

Here, if the operational restriction is not imposed, the procedure returns to a monitoring processing by the sensors 220 of the vehicle (step S101), and if the operational restriction is imposed, this restriction (S103) is released and then the procedure returns to the monitoring processing (S101) by the sensors 220 of the vehicle. Therefore, the operational restriction while stopping is released.

When determination is made that the vehicle is running by the monitoring processing (S101) by the sensors 220 of the vehicle, the procedure proceeds to step S104. The operable range-determining unit 123 acquires the current operating circumstances from the menu control unit 130 of the main control device 100 in the system in Fig. 1 and from both of the menu control unit 130 and the menu controller 151A and 152A of the active application in the system shown in Fig. 2.

On the basis of the operating circumstances obtained in step S104, the operable range-determining unit 123 searches a range of operations which can be completed under the circumstances of the driving load while running in step S105 and outputs the range to the menu control unit 130 shown in the system in Fig. 1 and a result of search to the menu control unit 130 and the menu controller 151A and 152A of the active application shown in the system in Fig. 2.

In the next step S106, it is determined whether the screen displayed under the operating circumstances acquired in step S104 is in the range searched by the operable range search processing (S105) or is outside the range (an operation which is inoperable while running is performed).

Then, in the case where the currently displayed screen is the operation which is inoperable while running, the procedure proceeds to step S107 and outputs a message indicating that the operation is inoperable while running. In contrast to this, in the case where, as a result of the operable range search processing (S105), the currently displayed screen is within the range determined to be operable, the procedure proceeds to step S108 and executes, via the output control unit 140, display allowing the operation only within the range searched by the operable range search processing (S105) in order to restrict the subsequent operations.

Although detailed examples of the processing in the steps S105 and S108 will be described, the respective examples are also applicable to any of the systems shown in Fig. 1 and Fig. 2.

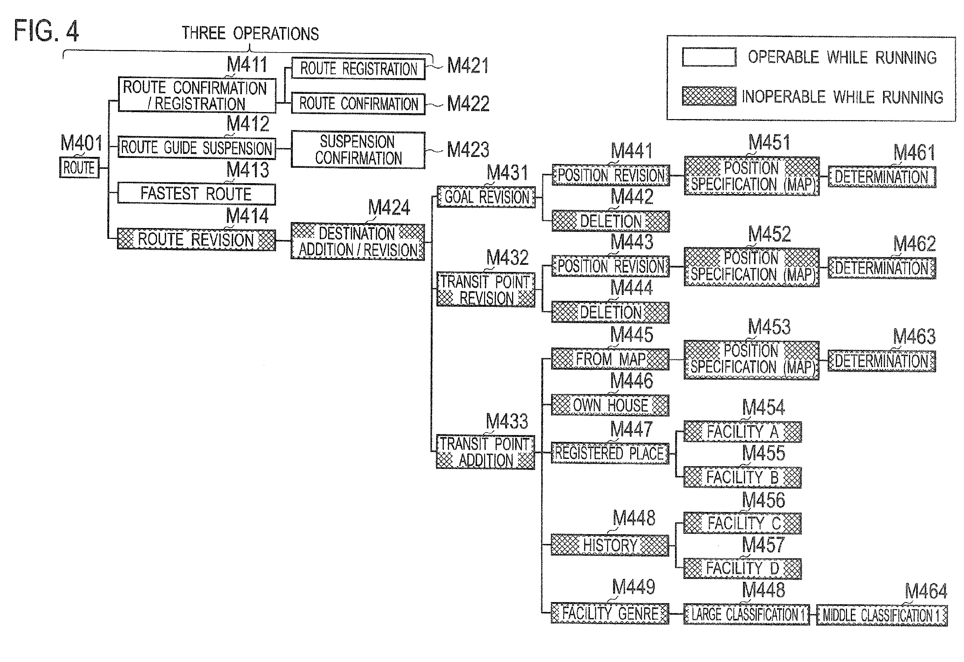

The operable range-determining unit 123 determines the operable range on the basis of the number of input operations taken until the operation is completed in step S105. Fig. 4 is one example of a menu structure that the menu control unit 130 has, and in the figure, the left side is a high hierarchy and the right side is a low hierarchy. Then, when a certain item of the high hierarchy is selected, a selection screen of sub-items connected to the item is displayed and selection of the next hierarchy becomes possible.

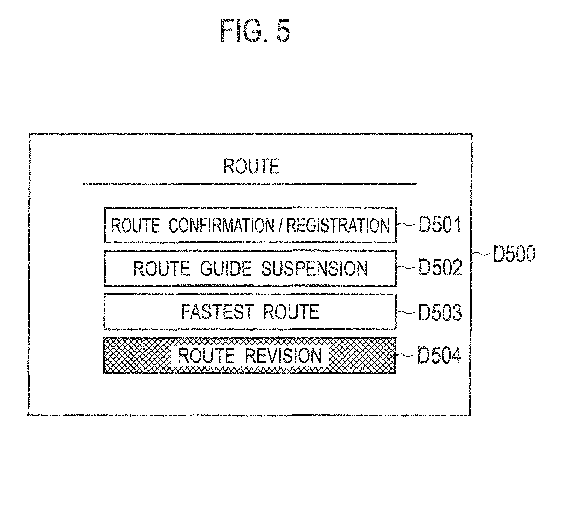

In the example shown in Fig. 4, the input device has a dedicated input switch relating to route search, and when the occupant presses the dedicated switch relating to route search, a route menu screen as shown in Fig. 5 is displayed on the display 232.

In the case of not selecting any of the items on the menu at a timing when it is determined that the load by driving has been increased by the load determination unit 121, the operable range-determining unit 123 extracts the operation capable of being completed by the operations of not more than the predetermined number. For example, the operable range-determining unit 123 extracts the operation capable of being completed by the operations of not more than three.

The operable range-determining unit 123 pays attention to a terminal item of the menu hierarchy in order to extract the operation capable of being completed by the operations of not more than the predetermined number. In the menu in Fig. 4, the terminal item means an item under which any item is not connected. A state where this item has been selected is regarded as a state where a certain operation has been completed.

Here, for example, when any operation on the menu in Fig. 4 is not selected at a timing of increasing the load by driving, the next operation the terminus of which is present within the third hierarchy from the top (Route M401) of the menu hierarchy is extracted as an operation capable of being completed within three operations. That is, there are four operations of Route (M401) → Route Confirmation/Registration (M411) → Route Registration (M421), Route (M401) → Route Confirmation/Registration (M411) → Route Confirmation (M422), Route (M401) → Route Guide Suspension (M412) → Suspension Confirmation (M423), and Route (M401) → Fastest Route (M413).

In this state, in the case where the dedicated switch relating to the route search is pressed, only Route Confirmation/Registration (D501), Route Guide Suspension (D502) and Fastest Route (D503) connected to the operation capable of being completed within the three operations are made operable in the menu in Fig. 5, and Route Revision (D504) is made inoperable.

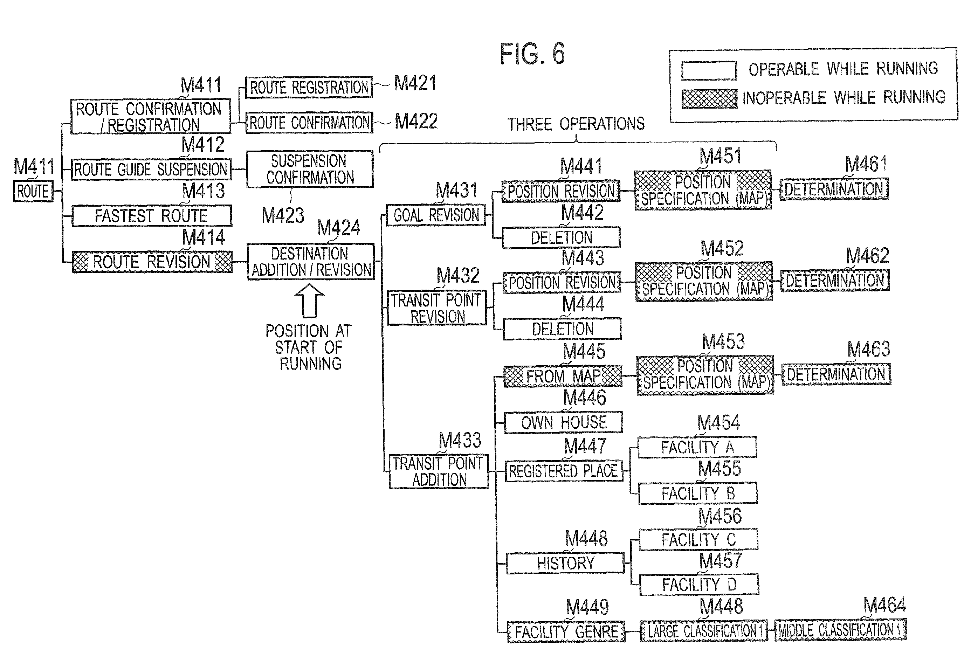

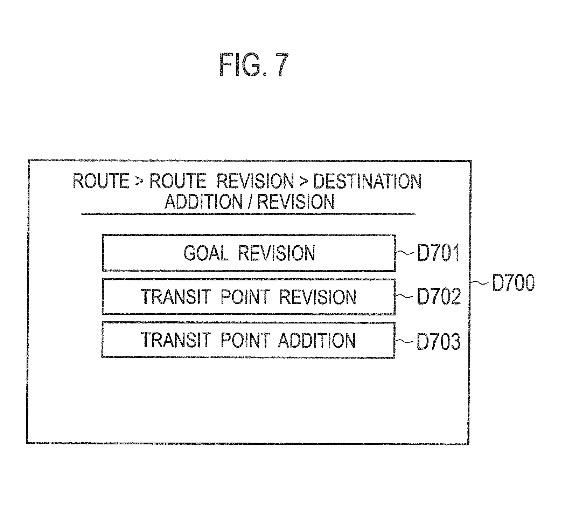

Next, another operation example of the operable range-determining unit 123 will be described. In Fig. 6 and Fig. 7, there will be described an example in which in the case where a determination is made that the load by driving has been increased in the middle of the operation, the operable range is determined. In this example, it is assumed that in the menus in Fig. 6, the increase in the driving load has been detected in a state where Destination Addition/Revision (M424) is selected and where a screen (see Fig. 7) for selecting any of Goal Revision (M431), Transit Point Revision (M432) and Transit Point Addition (M433) is displayed.

From this state, the operation which can be completed within three operations is an operation whose terminus is present within low three hierarchies of Destination Addition/Reversion (M424). Therefore, the following operations are extracted as the ones which can be completed within three operations. That is, five operations of Goal Revision (M431) → Deletion (M422), Transit Point Revision (M432) → Deletion (M444), Transit Point Addition (M433) → Own House (M446), Transit Point Addition (M433) → Registered Place (M447) → Facility Selection (M454, M455), Transit Point Addition (M433) → History (M448) → Facility Selection (M456, M457) are extracted by the operable range-determining unit 123.

Therefore, all of Target Revision (D701), Transit Point Revision (D702), and Transit Point Addition (D703) which are being displayed as options on the screen in Fig. 7 are made selectable, and for example, in the case of later selection of Destination Revision (D701), only Deletion (M442) is made selectable and Position Revision (M441) is made unselectable by being grayed out.

Next, another operational example of the operable range-determining unit 123 will be described. In this example, the operable range-determining unit 123 determines the operable range on the basis of the time expected to be taken until the operation is completed. That is, even in the input operations within the same one screen, for example, an operation of selecting one from two options as in the case of selecting "yes"/"no" and an operation of repeating selection of one from among several tens of options as in the case of character input are different from each other in time taken for operation. Therefore, an average time expected to be taken for the input operation on each screen is set in advance, and only the operation tin which the total time thereof falls within a fixed time is extracted as being operable. The time taken until the operation is completed is measured, for example, by a view-field obstruction method (Occlusion method), and when it falls within a predetermined value, the operation is made possible even while running.

Next, another embodiment for an operation which has been determined that the operation cannot be completed under the circumstances of the detected load will be described. Although, in the examples shown in Fig. 4 to Fig. 7, the operation determined to be incapable of being completed been made inoperable by being grayed out in the examples shown in Fig. 4 to Fig. 7, in this example, the operation determined to be incapable of being completed is made capable of being completed even under the environment of the detected driving load by simplifying the operation.

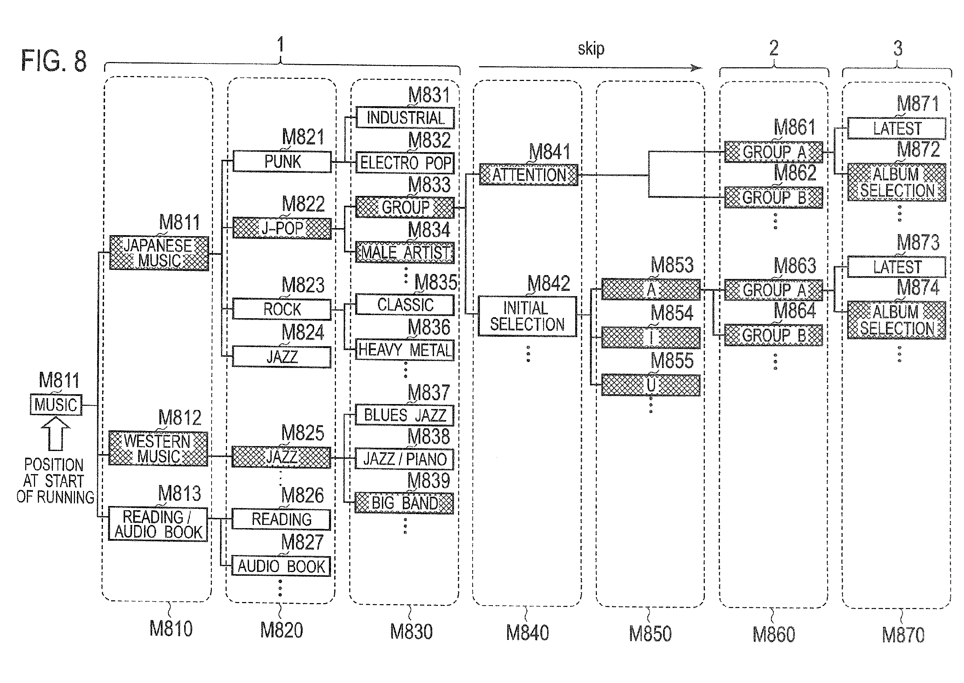

First, an example in which the limiting of the number of search objects by limiting search genres simplifies the number of operations will be described with reference to Fig. 8. Fig. 8 is a diagram showing a music search menu structure, and in this example, in music search, a music genre is selected from within Large Classification (M810), Middle Classification (M820) and Small Classification (M830), and thereafter detailed condition are selected by specifying Artist Specification Method (M840), Artist Name (M850), Music to be Reproduced (M860). Therefore, three operations are needed until specification of the detailed conditions is made.

Therefore, in the case of a system in which an operation capable of being completed within three operations is made possible while running, when running is started at the time of selecting Music Search (M811), any operation needs six operations until the operation is completed, and there exists no operation in which the operation can be completed within three operations. Therefore, in general, all the operations are made impossible while running.

In contrast to this, in this example, three operations needed for genre selection are made capable of being completed by one operation, and Artist Specification Method (M840) is fixed only to Attention (M841). This is because Initial Selection (M842) needs to select characters from the Japanese alphabet, and this operation is even singly inappropriate as the operation while running.

In addition, in order that three operations needed for genre selection may be made capable of being completed by one operation, the number of selectable genres is limited. As a limiting method, for example, there exist a method of limiting the number to popular genres many users select and a method of limiting the number to genres ever selected. Here, it is assumed that this user has ever selected the following three genres. That is,
Japanese Music → J-Pops → Group ... L1
Japanese Music → J-Pops → Male Artist ...L2
Western Music → Jazz → Big Band ... L3

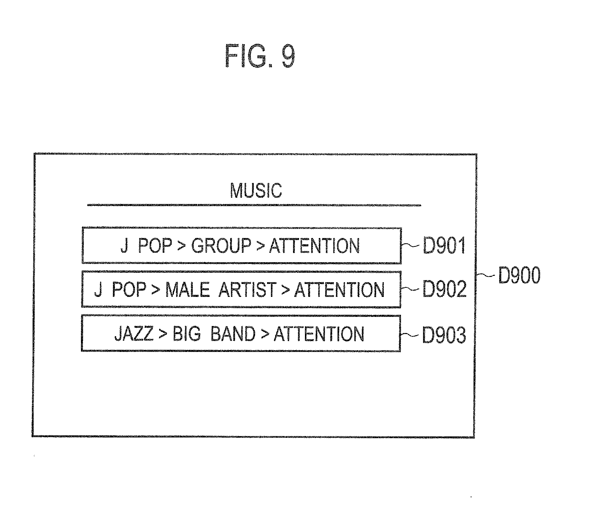

Therefore, the menu in the case of starting running at the time of selecting Music (M811) is as the screen shown in Fig. 9. Here, the option of D901 is the option in which an operation sequence being the same as that of performing the operations in order of L1 is performed at a time, and D902 corresponds to the operation sequence of L2 and D903 corresponds to that of L3. The user can complete any of the operation sequences (for three operations) of the corresponding L1 - L3, by one operation of selecting these items.

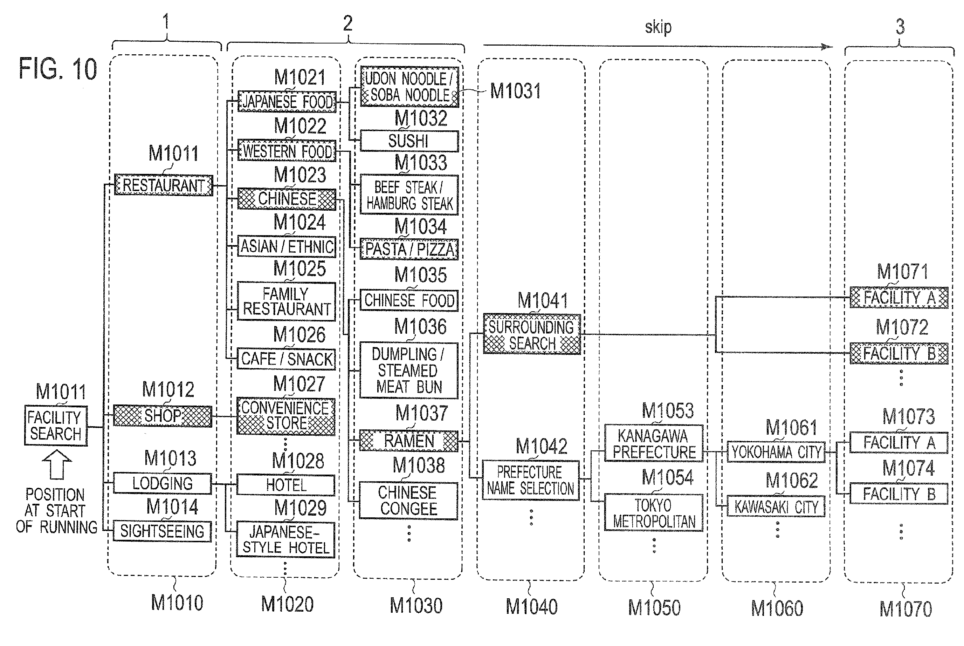

Next, an example in which limiting of the number of search objects by limiting the search objects in accordance with a current place simplifies the number of operations will be described using Fig. 10. Fig. 10 is a diagram showing a facility search menu structure, and in this example, in facility search, a facility genre is selected from within Large Classification (M1010), Middle Classification (M1020), and Small Classification (M1030), and thereafter detailed conditions are selected by specifying Search Method (M1040), Prefecture Name (M1050), and City, Ward, Town or Village Name (M1060). Therefore, in the case of the system in which the operation capable of being completed within three operations is made possible while running, when running is started at the time of selecting Facility Search (M1011), five to seven operations are needed until the operation is completed, and since there exists no operation in which the operation can be completed within three operations, and thus all the operations are disabled.

In contrast to this, in this example, the operation is simplified by completing three operations needed for genre selection by two operations, and by fixing Search Method (1040) only to Surrounding Search (M1041).

Specifications of Middle Classification (M1020) to Small Classification (M1030) after specification of Large Classification in the facility genre are simplified by one operation. Here, in the same way as the examples shown in Fig. 8 and Fig. 9, only frequently used facility genres and ever selected facility genres are presented as options in the middle and small classifications. Thereafter, since Search Method (M1040) is fixed to Surrounding Search (M1041), the hierarchy of Specification of Search Method (M1040) becomes unnecessary and it can be simplified by one operation.

An example of the case where this user has ever performed the following four operations will be described. That is, there are four operations of
Restaurant → Japanese Food → Udon Noodle, Soba Noodle,
Restaurant → Western Food → Pasta, Pizza,
Restaurant → Chinese Food → Chinese Noodle, and
Shop → Convenience Store.

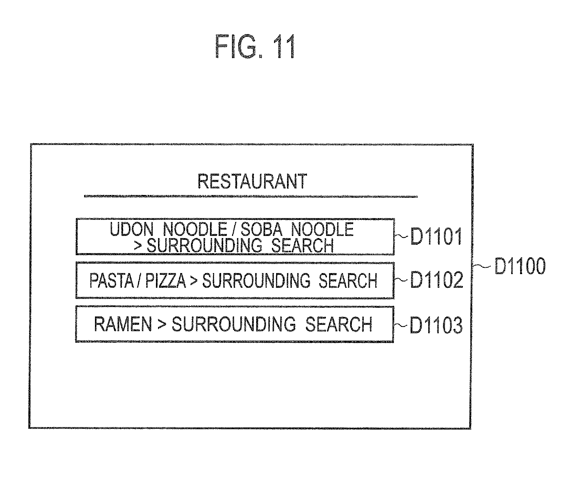

Since in the case where this user has started running after selection of a facility search function, several operations become operable even under the driving load environment by simplifying the operation, a selectable genre is presented. After that, it is assumed that the user has selected "Restaurant". A menu screen at that time is as shown in Fig. 11. Here, an operation in which two operations are generally required can be completed by one operation by displaying only the ever selected genres in the small classification of the facilities. In addition, also in case of selecting any of the items in the menu in Fig. 11 by fixing Search Method (M1040) to Surrounding Search (M1041), the following screen is a result of searching the specified genre in surroundings, and Facility Selection (M1070) can be made in the third operation.

As described above, according to the in-vehicle information equipment system of the present example, since the driving load is detected by using the existing components such as the sensors 220 provided without fail on the vehicle and only the operation which can be completed under this environment is allowed, additional components for inhibiting or allowing the operation such as the thermography and the camera are not especially needed.

In addition, according to the in-vehicle information equipment system of the present example, at the time of detecting the driving load (including its change) on the operator, the operation in which the operation can be completed within the range of driving load detected under the circumstances is extracted and is made possible. Therefore, even in a function, the operation of which has been impossible so far when it is detected that the driving load by running is large because the driving load exceeding a fixed load is applied in order to fully complete the operation, operations up to a fixed one are already completed within a time during which the running load is low, and if the remaining operation taken until the operation is completed is within a fixed range when it is detected that the driving load has been increased, the operation can be made possible.

In addition, according to the in-vehicle information equipment system of the present example, at the time when the vehicle speed has exceeded a fixed value, the operation in which the operation can be completed within the driving load detected under the circumstances is extracted and is made operable. Therefore, even in a function, the operation of which has been impossible so far while running because the driving load exceeding a fixed load is applied in order to fully complete the operation, operations up to a fixed one are already completed while standing, and if the remaining operation taken until the operation is completed is within a fixed range at the time of start of running, the operation can be made possible.

Moreover, according to the in-vehicle information equipment system of the present example, the driving load to be applied by the operation is determined by the number of operations taken until the operation is completed, and if the operation is one in which the operation can be completed by the number of operations of not more than a fixed number from the time of detecting the load (including its change) by the driving operation, the operation is made possible. Therefore, if the operation is one of inputting a selection format such as the menu of the hierarchy structure, its operable range can be easily defined.

Furthermore, according to the in-vehicle information equipment system of the present example, the driving load to be applied by the operation is determined by the time expected to be taken until the operation is completed, and if the operation is one in which the operation can be completed within a fixed time from the time of detecting the load (including its change) by the driving operation, the operation is made possible. Therefore, as in the case of selection from two items and in case of selection from among several tens of item, even in the case of mixing operations which are different in driving load applied to the operation regardless of the same selecting operation, the operation load can be kept below a certain level by extracting only the operation which can be completed within the fixed time.

Further, according to the in-vehicle information equipment system of the present example, an operation in which it has been determined that the operation cannot be completed under the detected load environment is provided by simplifying the complicated operation so that the operation can be completed even under the detected load environment, and thus a part of the complicated operation can be completed even in the case of the large driving load.

Furthermore, according to the in-vehicle information equipment system of the present example, in database search for searching a necessary item from among many items, in the case where an increase in load has been detected, selection candidates are reduced by presenting a search result by narrowing down to a specific genre. As a result, in the case where narrowing-down is not performed, a plurality of narrowing-down operations and the selection from among many search results are necessary, and thus also in the case where the operation time and the number of operations are increased and the operation cannot be completed under the detected load environment, the search objects are limited. Therefore, the number of operations and the time can be reduced, and partial search can be completed even in the case of the large driving load.

Moreover, according to the in-vehicle information equipment system of the present example, in facility search for searching a needed facility from among many facilities, in the case where an increase in load has been detected, selection candidates are reduced by limiting the search objects onto surroundings of a current position and the route. As a result, in the case where narrowing-down is not performed, a plurality of narrowing-down operations and the selection from among many search results are necessary, and thus also in the case where the operation time and the number of operations are increased and the operation cannot be completed under the detected load environment, the search objects are limited. Therefore, the number of operations and the time can be reduced, and partial search can be completed even in the case of the large driving load.

The above-mentioned function group 110 corresponds to the in-vehicle information equipment according to the present invention, the above-mentioned sensors 220 and load determination unit 121 correspond to the load detection unit according to the present invention, the above-mentioned operable range-determining unit 123 corresponds to the operation extraction unit according to the present invention, and the above-mentioned menu control unit 130 corresponds to the control unit and the operation simplification unit according to the present invention.

### REFERENCE SIGNS LIST

- 100: main control device
- 110: function group
- 121: load determination unit
- 123: operable range-determining unit
- 122: input processing unit
- 130: menu control unit
- 140: output control unit
- 150: application group
- 151: navigation application
- 151A: navigation menu controller
- 152: audio application
- 152A: audio menu controller
- 210: input devices
- 211: audio input microphone
- 212: switch, touch panels
- 220: sensors
- 221: vehicle signal acquisition device
- 222: GPS signal acquisition device
- 230: output devices
- 231: loudspeaker
- 232: display
- 240: storage device

## Claims

1. An operating device for in-vehicle information equipment, restricting an operation while driving for in-vehicle information equipment, the operating device for in-vehicle information equipment, comprising:
a load detection unit for detecting a driving load on an operator;
an operation extraction unit for extracting an operation which can be completed under circumstances of the detected driving load; and
a control unit for making only the extracted operation operable.

2. The operating device for in-vehicle information equipment according to claim 1, wherein
in a case where a vehicle speed becomes larger than a predetermined value, the load detection unit detects that the driving load has been increased.

3. The operating device for in-vehicle information equipment according to claim 1 or 2, wherein
the operation extraction unit extracts an operation which can be completed with a number of inputs of the operation which is not more than a predetermined number.

4. The operating device for in-vehicle information equipment according to claim 1 or 2, wherein
the operation extraction unit extracts an operation which can be completed in a predicted time required for an input operation, which is within a predetermined time.

5. The operating device for in-vehicle information equipment according to any one of claims 1 to 4, further comprising:
an operation simplification unit for simplifying the operation of a function determined to be incapable of being completed under the circumstances of the detected driving load.

6. The operating device for in-vehicle information equipment according to claim 5, wherein
in a case where the function determined to be incapable of being completed is a database search function, the operation simplification unit limits genres of search objects such that the operation can be completed under the circumstances of the driving load.

7. The operating device for in-vehicle information equipment according to claim 5, wherein
in a case where the function determined to be incapable of being completed is a facility search function, the operation simplification unit limits the search range of the search objects in accordance with a current position such that the operation can be completed under the circumstances of the driving load.
